(19) **Europäisches Patentamt**

**European Patent Office**

**Office européen des brevets**

(11) **EP 1 083 320 A2**

(12) **EUROPÄISCHE PATENTANMELDUNG**

(43) Veröffentlichungstag:
 **14.03.2001 Patentblatt 2001/11**

(51) Int. Cl.⁷: **F02D 33/02**

(21) Anmeldenummer: **00116645.3**

(22) Anmeldetag: **02.08.2000**

(84) Benannte Vertragsstaaten:
 **AT BE CH CY DE DK ES FI FR GB GR IE IT LI LU MC NL PT SE**
 Benannte Erstreckungsstaaten:
 **AL LT LV MK RO SI**

(30) Priorität: **11.09.1999 DE 19943534**
 **04.02.2000 DE 10004875**

(71) Anmelder:
 **Dr.Ing. h.c.F. Porsche Aktiengesellschaft**
 **70435 Stuttgart (DE)**

(72) Erfinder: **Kerkau, Martin**
 **75443 Ötisheim (DE)**

(54) **Brennkraftmaschine mit Turbolader und integrierter Ladedruckregelung**

(57) Es wird vorgeschlagen, bei der Bestimmung des Ladedruckes einen möglichen Druckverlust im Einlaßtrakt, welcher zu einem geringeren Brennraumdruck und damit zu einem geringeren Drehmoment führen würde, zu berücksichtigen. Hierbei wird der Druckverlust an der Drosselklappe und/oder an den Einlaßventilen bestimmt und geht als Korrekturwert bei der Berechnung des Ladedrucksollwertes mit ein.

Fig.2

EP 1 083 320 A2

Printed by Xerox (UK) Business Services
2.16.7 (HRS)/3.6

**Beschreibung**

Bei Brennkraftmaschinen mit einem Turbolader ist man bestrebt, einen frühen Ladedruckaufbau sowie einen harmonischen Druck- und damit einen stetigen Drehmomentenverlauf über Drehzahl und Gaspedalstellung zu erreichen und einen möglichst hohen Gesamtwirkungsgrad sicherzustellen. Diese verschiedenen Ziele lassen sich bei einer Brennkraftmaschine mit einer elektronischen Ladedruckregelung üblicherweise gut realisieren. Die Daten für den Ladedruck über Motorlast und Motordrehzahl sind in Kennfeldern gespeichert. Der Lader und das Westgate-Regelventil werden so dimensioniert, daß ein ausreichend großer Regelhub zur Verfügung steht. Als Lastinformation können hier sowohl der Saugrohrdruck als auch die angesaugte Luftmenge oder Luftmasse dienen. Zur Erzielung eines guten Motorwirkungsgrades wird die Ladedruckregelung stets mit einer Klopfregelung kombiniert, wodurch der Motor trotz höchstmöglichen Zündwinkel keinen Schaden durch klopfende Verbrennung nimmt. Aufgrund dieser Erfordernisse wird der Ladedrucksollwert für den Turbolader direkt aus dem Sollsaugrohrdruck berechnet.

Mit der erfindungsgemäßen Vorrichtung wird sichergestellt, daß ein an der Drosselklappe und/oder an den Einlaßventilen auftretender Druckabfall bei der Berechnung des Ladedrucksollwertes berücksichtigt wird. Damit ist eine noch bessere Anpassung an die Betriebsbedingungen, eine genauere Berechnung des Momentes und ein erhöhter Fahrkomfort gewährleistet. Die Berücksichtigung des Druckabfalls an der Drosselklappe ermöglicht es, einen Ladedrucksollwert zu berechnen, der nicht zu gering festgelegt wird und damit keinen zu geringen Saugrohrdruck bzw. Leistung bewirkt.

Durch die in den weiteren Ansprüchen aufgeführten Maßnahmen sind vorteilhafte Ausführungen und Verbesserungen des erfindungsgemäßen Gegenstandes gegeben.

So ist es vorteilhaft, den Druckabfall auch in die Höhenkorrektur des Ladedrucksollwertes einzubeziehen und bei der Druckbegrenzung bei einer zu hohen Motortemperatur zu berücksichtigen.

Ausführungsbeispiele der Erfindung sind in der Zeichnung dargestellt und in der nachfolgenden Beschreibung näher erläutert.

Es zeigen

Fig. 1 eine Brennkraftmaschine mit Ansaug- und Auslaßtrakt im Überblick,

Fig. 2 ein Struktogramm zur Durchführung des erfindungsgemäßen Verfahrens zur Berücksichtigung des Druckverlustes an der Drosselklappe.

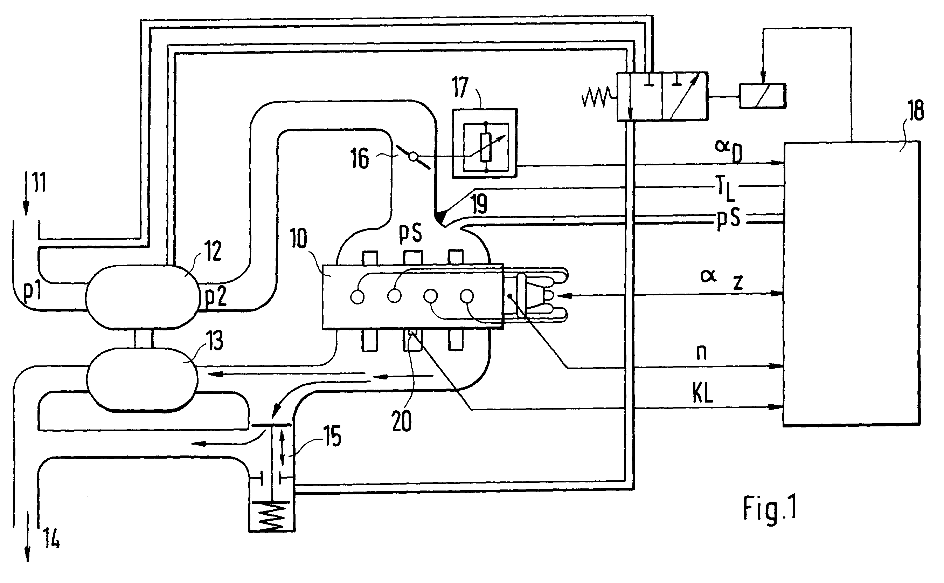

In Figur 1 ist im Überblick eine Brennkraftmaschine mit Einlaßtrakt und Auslaßtrakt sowie einem zugehörigen Steuergerät gezeigt.

Mit dem Bezugszeichen 10 ist hier ein Vierzylindermotorblock gezeigt. Über einen Ansaugkanal 11 wird dem Motor die Ansaugluft zugeführt. In dem Ansaugkanal ist der Verdichter 12 des Abgasturboladers angeordnet, der mit der Turbine 13, welche im Auslaßtrakt 14 angeordnet ist, zusammenwirkt. Mit dem Bezugszeichen 15 ist in der Figur 1 das Westgate-Regelventil angegeben. Dieses Westgate-Regelventil 15 wird so angesteuert, daß der Ladedruck-Sollwert eingestellt werden kann. Als Lastinformation wird der Saugrohrdruck $pS$ sowie die angesaugte Luftmenge oder Luftmasse ausgewertet. Die Zumessung des Kraftstoffes erfolgt mittels der Drosselklappe, die in der Figur 1 das Bezugszeichen 16 trägt. Der Öffnungswinkel der Drosselklappe 16 wird vom Drosselklappenpotentiometer 17 erfaßt und an ein Steuergerät 18 weitergeleitet. Bei dem Steuergerät 18 handelt es sich um ein sogenanntes Zünd-Einspritz-Steuergerät, welchem die Betriebsparameter, die am Motor erfaßt werden, zugeführt sind, und welches nach einer Auswertung der Betriebsparamter und einer Ermittlung der verschiedenen Steuergrößen diese Steuergrößen wiederum an die Peripherie des Motors zur Einstellung der Stellglieder ausgibt. So ist diesem Steuergerät beispielsweise auch die Ladelufttemperatur $T_L$ welche von einem Temperatursensor 19 erfaßt wird, das Signal eines Klopfsensors 20 sowie das Drehzahlsignal $n$ zugeführt.

Die elektronische Ladedruckregelung sorgt für nahezu ideale Ladedruckverläufe über die Motordrehzahl sowie ein gutes Regelverhalten bei Lastwechsel. Die Daten für den Ladedruck über Motorlast und Motordrehzahl sind in Kennfeldern gespeichert. Der Lader und das Westgate-Regelventil 15 sind so dimensioniert, daß ein ausreichend großer Regelhub zur Verfügung steht. Um einen guten Motorwirkungsgrad zu erreichen, wird die Ladedruckregelung mit einer Klopfregelung kombiniert. Hier kann der Motor trotz frühest möglichen Zündwinkel keinen Schaden durch klopfende Verbrennung nehmen, weil bei einem auftretenden Klopfen der Zündwinkel um einen vorgebbaren Wert nach spät verstellt wird. Um den Turbolader vor zu hohen Abgastemperaturen zu schützen, wird gleichzeitig bei zu großer Zündwinkel-Spätverstellung das Kraftstoff-Luft-Gemisch angereichert, so daß dadurch eine Kühlung des Laders auftritt.

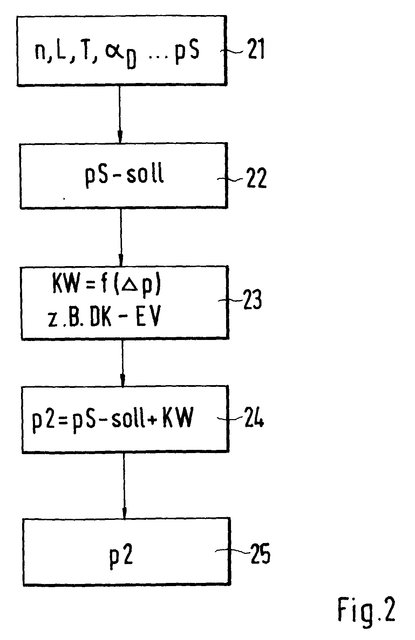

Figur 2 zeigt die erfindungsgemäße Bestimmung des einzustellenden Saugrohrdruckes, um das durch die Betriebsparameter geforderte Drehmoment bei der Verbrennung zur Verfügung stellen zu können.

Anhand Figur 2 soll das Wesen der Erfindung erläutert werden. In einem ersten Arbeitsschritt 21 werden die verschiedenen Betriebsparameter erfaßt und dem Steuergerät zugeführt. Hier wird beispielsweise die Drehzahl $n$, die Last $L$, die Temperatur $T$, der Saugrohrdruck $pS$ und der Drosselklappen-Öffnungswinkel αDK erfaßt. Der Saugrohrdruck pS ist maßgeblich dafür verantwortlich, welcher Druck im Brennraum pB bei der Verbrennung herrscht. Über den Turbolader ist eine Einstellung des Saugrohrdruckes möglich, so daß über diese Einstellung des Saugrohrdruckes der Brennraumdruck und somit das zur Verfügung gestellte Drehmoment bei der Verbrennung beeinflußt werden. Das Steuergerät berechnet aufgrund der ermittelten Betriebsparameter in einem Arbeitsschritt 22 den Brennraumsolldruck pB-Soll, damit das geforderte Drehmoment bei der Verbrennung gewährleistet ist, welches durch die Turbine 13 mit dem Verdichter 12 im Einlaßtrakt eingestellt werden soll.

Üblicherweise wurde der im Turbolader einzustellende Ladedrucksollwert p2 in Abhängigkeit des geforderten Drehmomentes und damit in Abhängigkeit des Sollsaugrohrdruckes pB-Soll berechnet, ohne daß ein möglicher Druckverlust berücksichtigt wurde. Bei einem Druckabfall an einer Drosselklappe oder an einem Einlaßventil wird ein zu geringer Ladedrucksollwert p2 vom Turbolader voreingestellt und es ergibt sich aufgrund der Druckverluste Δp ein zu geringer Brennraumdruck pB, was wiederum ein zu geringes Drehmoment im Vergleich zum geforderten Sollmoment bewirkt.

Bei dem erfindungsgemäßen Verfahren wird der Druckabfall der sich im Einlaßtrakt befindet, berücksichtigt. Dieser Druckabfall oder der Druckverlust Δp tritt zum einen an der Drosselklappe (DK) 16 und zum anderen an den Einlaßventilen (EV) in den Brennraum auf. Im Arbeitsschritt 23 werden die Druckverluste bestimmt und im Arbeitsschritt 24 berechnet das Steuergerät 18 einen Korrekturwert KW (KW=f(Δp)), welcher bei der Bestimmung des einzustellenden Ladedrucksollwertes p2 berücksichtigt wird, um trotz der Druckverluste im Einlaßkanal den geforderten Brennraumdruck pB zu erzielen. Der so ermittelte notwendige Ladedrucksollwert p2 wird im Arbeitsschritt 25 über eine entsprechende Einstellung des Westgate-Regelventils 15 und den Turbolader eingestellt.

In dem Korrekturwert KW wird weiterhin der Druckverlust in die Höhenkorrektur des Ladedrucksollwertes und die Druckbegrenzung bei zu hoher Motortemperatur mit eingerechnet.

**Patentansprüche**

1. Brennkraftmaschinen mit Turbolader und integrierter Ladedruckregelung, wobei aufgrund der aktuellen Betriebsparameter der Ladedrucksollwert berechnet und zur Einstellung dieses Ladedrucksollwertes an den Verdichter ausgegeben wird, dadurch gekennzeichnet, daß ein Druckverlust im Einlaßtrakt der Brennkraftmaschine insbesondere an der Drosselklappe und an den Einlaßventilen ermittelt wird, und aufgrund dieses Druckverlustes ein Korrekturwert (KW) bestimmt wird, welcher bei der Berechnung des Ladedrucksollwertes berücksichtigt wird.

2. Brennkraftmaschine nach Anspruch 1, dadurch gekennzeichnet, daß die sich aus den ermittelten Druckverlusten ergebenden Korrekturwerte in der Applikation ermittelt und im Steuergerät abgelegt werden.

3. Brennkraftmaschine nach Anspruch 1 und/oder 2, dadurch gekennzeichnet, daß in den Druckverlust eine Höhenkorrektur des Ladedruckes mit eingerechnet wird.

4. Brennkraftmaschine nach einem der vorherigen Ansprüche, dadurch gekennzeichnet, daß bei zu hoher Motortemperatur eine Druckbegrenzung erfolgt.

Fig.1

$\alpha_D$

$T_L$

$pS$

$\alpha_z$

$n$

$KL$

$p1$

$p2$

$pS$

EP 1 083 320 A2

Fig.2